# EUROPEAN PATENT SPECIFICATION

(11) **EP 3 115 215 B1**
(45) Date of publication and mention of the grant of the patent: **04.12.2019**
(21) Application number: 16178344.4
(22) Date of filing: 07.07.2016
(51) Int. Cl.: B29D 11/00, G02C 7/04, B41J 2/205, B41J 2/21, B41J 3/407

(54) **METHOD FOR MAKING A COLORED CONTACT LENS**
VERFAHREN ZUR HERSTELLUNG EINER FARBIGEN KONTAKTLINSE
PROCÉDÉ DE FABRICATION D'UNE LENTILLE DE CONTACT COLORÉE

(30) Priority: 07.07.2015 US 201562189288 P
(43) Date of publication of application: 11.01.2017
(73) Proprietor: NOVARTIS AG, 4056 Basel (CH)
(72) Inventor: Ochrombel, Rene, 50127 Bergheim (DE)
(74) Representative: Bohest AG

(56) References cited:
- EP-A1- 1 016 534
- EP-A1- 2 875 953
- WO-A1-2006/063836
- WO-A2-01/96934
- US-A- 5 625 397
- US-A1- 2002 118 233
- US-A1- 2003 085 934
- US-A1- 2011 069 276
- US-B1- 6 213 586

## Description

### FIELD OF THE INVENTION

The present invention relates to a method for applying a predetermined dot pattern to a surface of an ophthalmic lens or of an ophthalmic lens mold.

### BACKGROUND OF THE INVENTION

Ophthalmic lenses, in particular contact lenses, more particular soft contact lenses made of silicon hydrogels, are produced economically in large numbers using a fully automated molding process.

For cosmetic reasons, there is a certain demand for colored contact lenses. These colored contact lenses may enhance the natural appearance of the color of the iris of the eye of a user and/or may be used to provide a specific color or pattern to the iris of the eye of wearer. A known method for making colored contact lenses comprises applying an image in form of an ink dot pattern to a molding surface of a lens mold. Thereafter, lens-forming material is dispensed into the mold and cured to form the contact lens, thereby transferring the ink dot pattern from the mold to the contact lens.

Printing of ink dot patterns can be performed with the aid of inkjet printheads comprising one or more lines of inkjet nozzles to print a desired ink dot pattern to the molding surface of the contact lens mold. However, in case an inkjet nozzle of the inkjet printhead is clogged or is inoperative for other reasons, one or more ink dots of the desired ink dot pattern are not printed. Thus, a contact lens comprising a defective ink dot pattern (one or more ink dots are missing) is produced. Such defective ink dot pattern on the contact lens is easily visible and is therefore unacceptable for the user. Accordingly, colored contact lenses comprising a defective ink dot pattern cannot be distributed to the customers. As a result, the yield of the contact lens production process is reduced.

US 2003/0085934A1 discloses a method for making colored contact lenses and an apparatus for implementing the method of the invention. The apparatus of the invention comprises a securing means for holding a contact lens or a portion of a mold for making the contact lens, a printer head, wherein the printer head comprises one or more nozzles each of which is capable of jetting droplets of color liquid independent of each other under control of a computer system; a positioning means for precisely positioning the printer head at each of a plurality of predetermined positions, one at a time, on a surface of the contact lens or the mold portion under control of the computer system. The method and apparatus of the invention are useful for producing colored contact lenses having high quality color images thereon.

Also, it is known to produce contact lenses having a coding, or a marking, or both, indented in the surface of the contact lens. A coding includes in particular information related to the contact lens (for example the lot number, diopters, base curve radius, etc.) while a marking may in particular include a positional marking (for example indicating the horizontal or vertical axis position of a toric contact lens). Such coding or marking indented in the surface of the contact lens can be produced by applying a dot pattern of a liquid material to the molding surface of a contact lens mold and solidifying the liquid material on the molding surface to form an elevated dot pattern on the molding surface. This elevated dot pattern on the molding surface of the contact lens mold is reproduced as a corresponding indented dot pattern in the respective surface of the contact lens. After the molding process is complete and the contact lens is demolded, the elevated dot pattern can be removed from the contact lens mold and the contact lens mold can be re-used with or without a new dot pattern being applied to produce another contact lens. Typically, the dot pattern representing the coding or marking is made using materials as paraffin (CAS-Nr. 8002-74-2) or tetracosane (CAS-Nr. 646-31-1). This technique is described, for example, in US 2015/0151461.

Such patterns can be applied, for example, using valve jet techniques. Also in this case, if a nozzle of a valve jet device is clogged or is inoperative for other reasons, one or more dots of the desired elevated dot pattern are not applied to the surface of the contact lens mold. As a consequence, a contact lens comprising a defective dot pattern representing a defective coding or marking (one or more indentations are missing) is produced. Such defective dot pattern on the contact lens is unacceptable as the information contained in the coding (or the marking) is wrong or incomplete. Also here, the result is that the yield of the contact lens production process is reduced.

It is therefore an object of the present invention to provide an improved method for applying a predetermined dot pattern to a surface of an ophthalmic lens or ophthalmic lens mold which overcomes or at least greatly reduces the disadvantages of the prior art described above.

### SUMMARY OF THE INVENTION

This object is achieved by a method according to the invention as it is specified in independent claim 1. Advantageous aspects of the method according to the invention are the subject of the dependent claims.

The term "dot forming material" is meant to be a colored dot forming material as, according to the invention, ink. According to comparative examples, a dot forming materials useful for the coding and marking of contact lenses, for example paraffin based materials (e.g. those mentioned further above), can be applied in the manner described above.

One of the advantages of the method according to the invention is that if one jet nozzle of the at least two different jet nozzles is for any reason inoperative, the other jet nozzle may still apply dot forming material to the surface of the ophthalmic lens or of the ophthalmic lens mold and thereby partly apply the individual dot or each individual dot of the predetermined dot pattern, leading to a partly applied dot pattern. It is very unlikely that all jet nozzles for applying an individual dot are inoperative at the same time, so that it is very unlikely that a dot is not at least partly applied. The more different jet nozzles are used to apply an individual dot, the less likely it is that an individual dot is not at least partly applied.

For example, two different jet nozzles can be used to apply an individual dot, and for the various individual dots of a predetermined dot pattern different jet nozzles can be used to apply the individual dots. Each of the two respective different jet nozzles assigned to an individual dot can apply a certain portion of the amount of dot forming material required for the individual dot to achieve a predetermined contrast. By way of example, each of the two different jet nozzles can apply half of the amount of dot forming material required for each individual dot to achieve the predetermined contrast. If both jet nozzles are operative, the contrast of the individual dot corresponds to the contrast of an individual dot applied to the surface of an ophthalmic lens or of an ophthalmic lens mold using only one single jet nozzle which applies the total amount of dot forming material. Should one of the two different jet nozzles be inoperative and the other one of the two different jet nozzles be operative, half of the amount of dot forming material required for the individual dot is applied to the surface of the ophthalmic lens or of the ophthalmic lens mold, thereby forming a partly applied dot. However, although the contrast of such partly applied individual dot is smaller than the predetermined (desired) contrast of the respective individual dot, such partly applied dot is by far less noticeable and may not even be noticed at all.

This is because the human eye is much more sensitive in detecting a missing individual dot (or even a line of missing dots) within a predetermined dot pattern when compared to detecting an only partly applied individual dot or a line of partly applied individual dots within a predetermined dot pattern. Thus, contact lenses having one or more partly applied individual dots or a line of partly applied individual dots can still be acceptable and may not have to be disposed of. As a result, the yield of the contact lens production can be increased.

Due to the very low likelihood that both jet nozzles applying an amount of dot forming material to produce an individual dot are inoperative at the same time, it may not be necessary to include a step of inspecting the dot pattern, although such inspection of the dot pattern is clearly preferred. However, it is also preferred to have some detection process in place detecting when a jet nozzle is inoperative (e.g. clogged) in order to take corrective measures as soon as possible (e.g. using another jet nozzle or another printhead).

While using two different jet nozzles to apply individual dots may be advantageous from the point of view of an effective production of colored, coded or marked contact lenses, it is well within the scope and teaching of the present invention to use three, four, or even more different jet nozzles to apply one individual dot. By using three, four or even more than four different jet nozzles the yield can further be increased because in case one jet nozzle is inoperative while the other jet nozzles are operative the color contrast of the partly applied dot is reduced to a lesser extent only.

Also, any split of the amount of dot forming material to be applied by each of the jet nozzles to produce an individual dot is possible. Advantageously, the amount of dot forming material applied by each jet nozzle involved in the production of an individual dot is equally split between these jet nozzles. As mentioned already, each of two different jet nozzles can preferably apply half of the amount of dot forming material required for an individual dot to achieve the predetermined contrast, in case of three jet nozzles involved in the production of an individual dot each of three different jet nozzles may apply a third of the amount of dot forming material required for an individual dot to achieve the predetermined contrast, and in case of four different jet nozzles involved in the production of an individual dot each of these four different jet nozzles may apply a quarter of the amount of dot forming material required for an individual dot, and so on.

According to the method of the invention, individual dots may be applied by the at least two different jet nozzles either simultaneously or successively. Applying individual dots using the at least two different jet nozzles simultaneously has the advantage of being able to apply individual dots within a short period of time. Applying individual dots by using the at least two different jet nozzles successively may provide for a more effective production of the individual dots.

Successively applying the individual dots may be advantageous, for example, in a comparative example of a hot-melt dot forming material the first layer of an individual dot has at least partially hardened before the next layer of dot forming material is applied. Thereby, the next layer may better adhere to the previously applied layer. Dot forming materials suitable for that purpose according to the comparative example, are those mentioned above and include in particular paraffin based materials.

Depending on the number and spacing of the individual dots of a predetermined dot pattern it may be difficult to provide and arrange a plurality of jet nozzles in a manner such that all individual dots of the predetermined dot pattern are applied simultaneously, or that at least the first layer of the individual dots of the predetermined dot pattern can be applied simultaneously. Therefore, it may be advantageous to apply the individual dots of the predetermined dot pattern line by line. This can be achieved by moving the jet nozzles relative to the ophthalmic lens or the ophthalmic lens mold. Once the dots of one line have been properly applied, the jet nozzles can be moved relative to the ophthalmic lens or to the ophthalmic lens molds and the dots of the next line can then be produced.

For exactly positioning the jet nozzles and the ophthalmic lens or the ophthalmic lens mold relative to each other, position encoding of the ophthalmic lens or the ophthalmic lens mold or of the jet nozzles may be performed.

An example of a predetermined pattern that can be produced in accordance with the method of the instant invention is a limbal ring pattern. Colors typically used in limbal ring patterns are black, brown, or mixtures of these colors or both these colors.

For any predetermined dot pattern it may be advantageous to apply per individual dot a total amount of dot forming material which is larger than the amount of dot forming material required for each individual dot to achieve the predetermined contrast.

For example, if two different jet nozzles are used to apply an individual dot, both nozzles may each apply the amount of dot forming material that is required to achieve the predetermined color contrast (or to say it in other words, twice the amount of dot forming material required to achieve the desired contrast is applied for each individual dot in case both jet nozzles are operative). However, if the contrast is already the maximum contrast when the required amount of dot forming material is applied, the color contrast cannot be further enhanced by applying more dot forming material, however, in case one jet nozzle is inoperative the contrast provided by the individual dot is still the (desired) maximum contrast. And while this measure involves a certain waste of dot forming material, this measure further increases the likelihood of producing a fault-free dot pattern having the predetermined (desired) contrast.

The method according to the invention is particularly suitable in the production of colored, coded or marked ophthalmic lenses. The term "ophthalmic lens" as used herein shall be understood as including but not being limited to contact lenses, in particular soft contact lenses. Correspondingly, the term "ophthalmic lens mold" as used herein shall be understood as including but not being limited to molds that are used in the production of contact lenses, in particular in the production of soft contact lenses.

### BRIEF DESCRIPTION OF THE DRAWINGS

Further advantageous aspects of the invention become apparent from the following description of embodiments of the invention with reference to the accompanying schematic drawings in which:
- Fig. 1: shows a cross-section through an individual dot of a predetermined dot pattern;
- Fig. 2: shows a limbal ring pattern representing an example of a predetermined dot pattern;
- Fig. 3: shows the limbal ring pattern of Fig. 2, however, with two lines of dots missing and with a further line of dots being only incompletely (partly) applied;
- Fig. 4: shows an image of droplets on their way from the jet nozzle to the surface of the ophthalmic lens or of the ophthalmic lens mold;
- Fig. 5: shows an embodiment of an arrangement of the jet nozzles and ophthalmic lens mold in accordance with the invention, and
- Fig. 6: shows an arrangement of the jet nozzles (of a single printhead) in accordance with the invention.

### DETAILED DESCRIPTION OF EMBODIMENTS

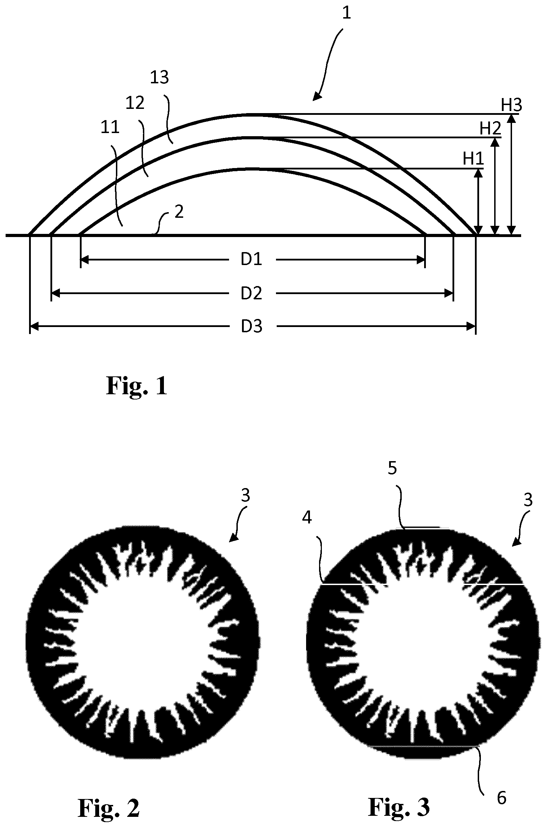

In Fig. 1 a cross-section through an individual dot 1 of a predetermined dot pattern 3 (not shown in Fig. 1) on the surface 2 of an ophthalmic lens or an ophthalmic lens mold is shown. In the following, by way of example only application of ink dots to the surface of an ophthalmic lens mold, in particular to a female mold for molding soft contact lenses, is discussed, although they are applicable for other dot forming materials (for example those mentioned above), too. The individual ink dot 1 can be made of a plurality of ink layers. In Fig. 1 three such ink layers 11, 12, 13 are shown. These are produced by applying a first ink layer 11 to the surface 2 of the ophthalmic lens mold using a first inkjet nozzle 16 (not shown in Fig. 1). Thereafter, a second ink layer 12 is applied onto the first ink layer 11 using an inkjet nozzle different from the inkjet nozzle that has been used to apply the first inkjet layer 11. Finally, optionally a third ink layer 13 is applied onto the second ink layer 12 using an inkjet nozzle which is again different from the inkjet nozzles that have been used to apply the first ink layer 11 and the second ink layer 12. As can be seen, the upper surfaces of the ink layers 11, 12, 13 have a parabolic shape. The parameters of the parabolic shape depend on the viscosity and surface tension of the applied ink. The first ink layer 11 has a diameter D1 and a height H1. When applying a second ink layer 12 onto the first ink layer 11, the diameter D2 of the ink dot 1 comprising a first ink layer 11 and a second ink layer 12 is only slightly larger than the diameter D1 of the ink dot only comprising the first ink layer 11. However, the height H2 of the individual ink dot 1 comprising the first ink layer 11 and the second ink layer 12 is significantly greater than the height H1 of the ink dot only comprising the first ink layer 11. When applying a third ink layer 13 onto the second ink layer 12, the diameter D3 of the individual ink dot 1, now comprising a first ink layer 11, a second ink layer 12 and a third ink layer 13, again is only slightly larger than the diameter D2 of the ink dot comprising the first ink layer 11 and the second ink layer 12. Typical diameters of such individual ink dots may, for example, be in the range of 10 µm and 300 µm. Typical heights of individual ink dots are in the range of *2µm* and *40µm.* Accordingly, applying the individual ink dots 1 layer by layer does not result in a substantial increase in the diameter of the individual ink dot but results in a substantial increase in height of the individual ink dot. Color contrast is correlated with the height of the individual ink dot. Assuming that the height H2 corresponds to the maximum color contrast of the ink dot 1, application of any further additional ink layer does not recognizably change the color contrast of ink dot 1 anymore. Thus, the third ink layer 13 can be considered as being redundant. Let us know assume, that one ink layer of the three ink layers is not applied, which may occur if one of the three different inkjet nozzles is inoperative. Accordingly, only two ink layers are applied to the surface of the ophthalmic lens mold and still produce the desired maximum color contrast while the size of ink dot 1 is only insubstantially smaller. Even in the case that two ink layers of the three ink layers are not applied (corresponding to the extremely rare case where two different inkjet nozzles are inoperative at the same time), an ink dot 1 having only one ink layer is produced, and the contrast of this ink dot 1 (although not being the maximum contrast) may still hardly be noticeable or is at least much less noticeable than if no ink dot 1 is present.

**Fig. 2** shows a predetermined dot pattern 3 in form of a limbal ring ink dot pattern. The limbal ring ink dot pattern 3 shown in Fig. 2 is perfect (fault-free).

**Fig. 3** shows the limbal ring ink dot pattern 3 of Fig. 2, however, the limbal ring ink dot pattern 3 of Fig. 3 is not fault-free. As can be seen in Fig. 3, the individual ink dots are completely missing along two lines 4, 5 so that the lens is transparent along these lines 4, 5. Such transparent lines 4, 5 are easily recognizable for persons other than the user when the lens is worn. As can also be seen in Fig. 3, the limbal ring ink dot pattern 3 comprises a line of only partly applied individual ink dots 6 (the contrast is exaggerated in Fig. 3 for illustration purposes, as the lens it typically worn on the eye of a user in a manner such that the limbal ring pattern comes to lie over the iris of the eye) which is only hardly recognizable for persons other than the wearer.

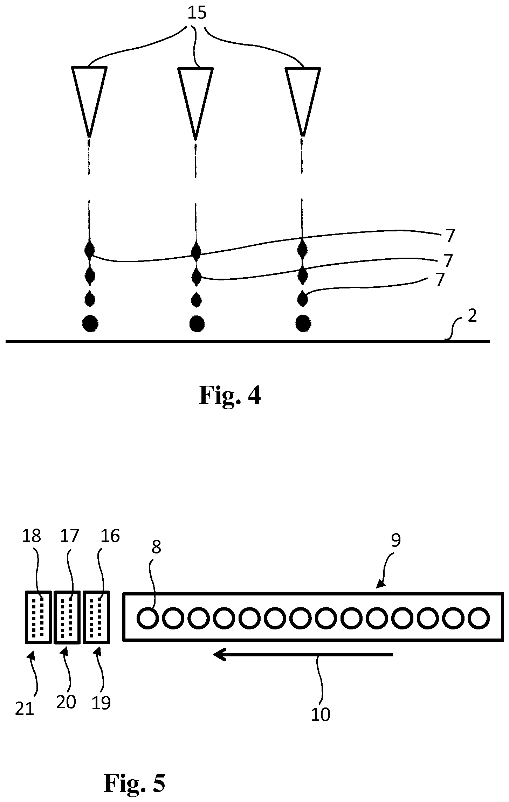

**Fig. 4** shows an image of ink droplets on their way from inkjet nozzles 15 to the surface 2 of the ophthalmic lens mold. As can be seen, several ink droplets 7 are ejected from each of the inkjet nozzles 15. These individual ink droplets 7 ejected by the respective inkjet nozzles 15 combine to form a single drop before contacting the surface 2 of the ophthalmic lens mold. Each such drop may form one layer of an ink dot 1 as described above. An inkjet printhead comprising such inkjet nozzles 15 and suitable for being used in the method according to the invention is the inkjet printhead of the type "TEC CF1" available from the company Toshiba Tec Corporation, Japan. However, other inkjet printheads are suitable as well.

**Fig. 5** shows an embodiment of an arrangement of three inkjet printheads 19, 20, 21 each comprising a plurality of inkjet nozzles 16, 17, 18, as well as a plurality of ophthalmic lens molds 8 arranged on a carrier 9. The carrier 9 with the ophthalmic lens molds 8 arranged thereon is movable along a straight line representing the direction of movement 10 (see arrow) indicated in Fig. 5. As can be seen in Fig. 5, the inkjet printheads 19, 20, 21 are successively arranged (one after another) when viewed in the direction of movement of the carrier 9 (see arrow 10). The individual inkjet nozzles 16, 17, 18 of the respective inkjet printhead 19, 20, 21 are arranged along two straight lines perpendicular to the direction 10 of movement of the carrier 9 on which the ophthalmic lens molds 8 are arranged. For example, the first inkjet printhead 19 may comprise a plurality of first inkjet nozzles 16 arranged along two parallel straight lines perpendicular to the direction 10 of movement of the carrier 9 on which the ophthalmic lens molds 8 are arranged. Likewise, the second inkjet printhead 20 and the third inkjet printhead 21 comprise a plurality of second inkjet nozzles 17 and a plurality of third inkjet nozzles 18, respectively, which are arranged in the same manner as described for inkjet printhead 19. The corresponding individual inkjet nozzles 16, 17, 18 of the inkjet printheads 19, 20, 21 are fixedly arranged along a plurality of straight lines parallel to the direction of movement 10 of the carrier 9 on which the ophthalmic lens molds 8 are arranged. Such an arrangement is suitable to apply a desired ink dot pattern to the surface of the ophthalmic lens molds 8 arranged on carrier 9.

For the application of an ink dot pattern, carrier 9 is moved (for example at a constant speed) in the direction of movement 10. The individual ink dots 1 of the predetermined ink dot pattern 3 (e.g. the limbal ring ink dot pattern shown in Fig. 2) are arranged along a plurality of straight parallel lines extending in the direction of movement 10 (indicated by the arrow). In Fig. 3 such a straight parallel line is indicated by the horizontal line 4 along which the individual ink dots are missing. It is evident, that along each such line not at every location along the line an ink dot is to be printed, however, the locations of the individual ink dots of the entire ink dot pattern 3 are arranged along such straight lines.

To produce such pattern, once an ophthalmic lens mold 8 is passing underneath the nozzles 16 of the first inkjet printhead 19, the first inkjet nozzles 16 arranged along the two straight lines perpendicular to the direction of movement 10 apply a first ink layer 11 (see Fig. 1) of a plurality of individual ink dots 1 which are arranged along a vertical line (a line arranged perpendicular to the direction of movement 10), and this first line of ink dots arranged perpendicular to the direction of movement corresponds to the left outermost vertical line in Fig. 2. As is evident only some of the first inkjet nozzles 16 are to apply a first ink layer 11 to the surface 2 of the ophthalmic lens mold 8, as the outermost left vertical line of the limbal ring pattern 3 of Fig. 2 comprises ink dots only at locations near a horizontal centerline. After a predetermined period of time, for example less than 0.2 s (seconds), the lens mold 8 arranged on carrier 9 has moved horizontally to the left for a distance that corresponds to the distance between two adjacent individual ink dots arranged on the same horizontal straight line, so that the first layer of the adjacent ink dot which is arranged along the same straight horizontal line is to be applied. The first layer of individual ink dots which are arranged along a vertical line perpendicular to the direction of movement is then applied by the inkjet nozzles 16, however, this time the individual ink dots applied are arranged along the second outermost left vertical line in Fig. 2, and so on. In this manner, the first layer of each individual ink dot of the predetermined ink dot pattern is applied, before the respective second ink layer is applied on top of the respective first ink layer.

The respective second ink layer 12 of each individual ink dot 1 is applied on top of the respective first ink layer 11 of the respective individual ink dot 1 with the aid of the second inkjet nozzles 17 of the second inkjet printhead 20 in the same manner as already described for the application of the first ink layer 11.

A respective third ink layer 13 can then be applied on top of the respective second ink layer 12 of each individual ink dot 1, and the respective third ink layer 13 can be applied with the aid of the third ink dot nozzles 18 of the third inkjet printhead 21 in the same manner as already described for the application of the second ink layer 12. Depending on whether the second ink layer 12 or the third ink layer 13 is the final ink layer applied, the ink layers can then be cured (e.g. by irradiation with UV light).

In the extremely unlikely event that a first inkjet nozzle, and a corresponding second inkjet nozzle, and a corresponding third inkjet nozzle are all inoperative at the same time, a horizontal line 4, 5 of missing individual ink dots may result, as is shown in Fig. 3. In the still very unlikely event that two of the three corresponding first, second and third inkjet nozzles are inoperative at the same time, a horizontal line 6 of partly applied individual ink dots is printed, as also shown in Fig. 3. In case the amount of ink applied by all three corresponding first, second and third inkjet nozzles is half the amount of ink required to achieve the predetermined (desired) contrast of an individual ink dot and one of the three corresponding first, second and third inkjet nozzles is inoperative, no line of partly applied ink dots is printed, since the desired contrast is already achieved by the printing of two ink layers (the third ink layer is redundant).

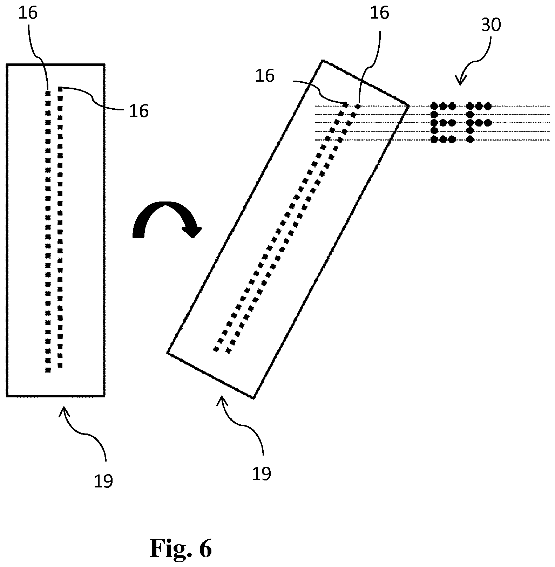

In **Fig. 6** a further arrangement of the inkjet nozzles 16 of a single printhead 19 is shown. The printhead 19 has been rotated by an angle from its original position perpendicular to the direction of movement of the molds (see Fig. 5) to an inclined position, as this is indicated by the arrow arranged between the two printhead positions. From Fig. 6 it can be seen that the individual ink jet nozzles 16 of the printhead 19 are arranged along two rows in a (staggered) zig-zag arrangement. When the printhead 19 is arranged in the inclined position the inkjet nozzles 16 are arranged along the plurality of straight lines which are also indicated in Fig. 6 by the dotted lines. Each of the individual ink dots of the predetermined pattern 30, here in form of the letters "EF", can then be printed by the respective two different nozzles 16 of the single printhead 19 which are arranged along the respective straight line. It is thus possible for the individual ink dots of the ink dot pattern 30 to be printed by a single printhead 19.

Advantageously, high quality industrial inkjet printheads, for example of the type "TEC CF1" available from the company Toshiba Tec Corporation, Japan, as well as of the type "Xtec CK1" or "Xtec CK1L" can be used. However, other industrial inkjet printheads are suitable as well.

In a comparative example where hot-melt dot forming materials (for example paraffin based dot forming materials) are used, for example for coding or marking or both in the manner described further above, valve jet technology instead of inkjet technology can be used. For example, valve jet devices of the series TS9000 available from the company OK International/ Techcon Systems Garden Grove, California, United States of America are suitable for that purpose.

While an embodiment of the method according to the invention has been described with the aid of the drawings, it is evident that various changes and modifications can be made to the method without departing from the teaching of the invention. Therefore, the scope of protection is defined by the appended claims.

## Claims

1. Method for applying a predetermined ink dot pattern (3, 30) to a surface (2) of an ophthalmic lens or of an ophthalmic lens mold (8), the method comprising the steps of:
- providing a plurality (15) of jet nozzles;
- applying the predetermined ink dot pattern (3, 30) to the surface (2) of the ophthalmic lens or of the ophthalmic lens mold (8) using the plurality (15) of jet nozzles,
wherein applying the predetermined ink dot pattern (3, 30) to the surface (2) of the ophthalmic lens or of the ophthalmic lens mold (8) comprises applying each individual ink dot (1) of the predetermined ink dot pattern (3) by using at least two different jet nozzles (16, 17, 18) of the plurality (15) of jet nozzles,
**characterized in that** applying each individual ink dot (1) of the predetermined ink dot pattern (3, 30) is performed by applying per individual ink dot (1) a total amount of ink larger than the amount of ink required for each individual ink dot (1) to achieve a predetermined contrast.

2. Method according to claim 1, wherein the respective at least two different jet nozzles (16, 17, 18) of the plurality (15) of jet nozzles used to apply each individual ink dot (1) of the predetermined ink dot pattern (3, 30) are successively used to apply the respective individual ink dot (1) .

3. Method according to claim 2, wherein applying each individual ink dot (1) of the predetermined ink dot pattern (3) comprises applying a first layer (11) of an ink to the surface (2) of the ophthalmic lens or of the ophthalmic lens mold (8) using a first jet nozzle (16) of the respective at least two different jet nozzles (16, 17, 18), and thereafter applying at least one further layer (12, 13) of the ink on the first layer (11) of the ink using a second jet nozzle (17) of the respective at least two different jet nozzles (16, 17, 18) different from the first jet nozzle (16) of the respective at least two different jet nozzles (16, 17, 18).

4. Method according to claim 3, wherein applying each individual ink dot (1) of the predetermined ink dot pattern (3, 30) comprises at least partially curing the layers of ink of each individual ink dot after a final layer (12, 13) of ink of each individual ink dot has been applied.

5. Method according to any one of the preceding claims, wherein the individual ink dots (1) of the predetermined ink dot pattern (3, 30) are arranged along a plurality of straight parallel lines, and wherein the respective at least two different jet nozzles (16, 17, 18) and the ophthalmic lens or the ophthalmic lens mold (8) are moved relative to each other along the plurality of straight parallel lines to apply each individual ink dot (1) of the predetermined ink dot pattern (3, 30) to the surface (2) of the ophthalmic lens or of the ophthalmic lens mold (8).

6. Method according to claim 5, wherein the plurality (15) of jet nozzles is arranged along at least one straight line perpendicular to the straight parallel lines along which the individual ink dots (1) of the predetermined ink dot pattern (3) are arranged.

7. Method according to claim 2 and anyone of claims 5 or 6, wherein applying each individual ink dot (1) of the predetermined ink dot pattern (3, 30) is performed by moving the ophthalmic lens or the ophthalmic lens mold (8) along the plurality of straight parallel lines along which the individual ink dots (1) of the predetermined ink dot pattern (3, 30) are arranged, and by successively using three different jet nozzles (16, 17, 18) of the plurality (15) of jet nozzles which are consecutively and fixedly arranged along one said straight line of the plurality of straight parallel lines.

8. Method according to any one of the preceding claims, wherein the predetermined ink dot pattern (3, 30) is a limbal ring pattern.

9. Method according to any one of the preceding claims, wherein the ophthalmic lens (8) is a contact lens, in particular a soft contact lens, and wherein the ophthalmic lens mold (8) is a contact lens mold, in particular a contact lens mold for molding soft contact lenses.

10. Method according to any one of the preceding claims, wherein the surface (2) of the ophthalmic lens mold (8) to which the predetermined ink dot pattern (3, 30) is applied is the molding surface of a female ophthalmic lens mold (8).

## Patentansprüche

1. Verfahren zum Auftragen eines vorgegebenen Tintenpunktmusters (3, 30) auf eine Oberfläche (2) einer ophthalmischen Linse oder einer ophthalmischen Linsenform (8), wobei das Verfahren die Schritte umfasst:
- Bereitstellen einer Vielzahl (15) von Strahldüsen;
- Auftragen des vorgegebenen Tintenpunktmusters (3, 30) auf die Oberfläche (2) der ophthalmischen Linse oder der ophthalmischen Linsenform (8) unter Verwendung der Vielzahl (15) von Strahldüsen;
wobei Auftragen des vorgegebenen Tintenpunktmusters (3, 30) auf die Oberfläche (2) der ophthalmischen Linse oder der ophthalmischen Linsenform (8) Auftragen jedes individuellen Tintenpunkts (1) des vorgegebenen Tintenpunktmusters (3) umfasst, indem mindestens zwei verschiedene Strahldüsen (16, 17, 18) von der Vielzahl (15) der Strahldüsen verwendet werden,
**dadurch gekennzeichnet, dass** Auftragen jedes individuellen Tintenpunkts (1) des vorgegebenen Tintenpunktmusters (3, 30) durchgeführt wird, indem pro individuellem Tintenpunkt (1) eine Gesamtmenge an Tinte aufgetragen wird, die größer ist als die Menge an Tinte, die für jeden individuellen Tintenpunkt (1) erforderlich ist, um einen vorgegebenen Kontrast zu erreichen.

2. Verfahren nach Anspruch 1, wobei die jeweiligen mindestens zwei verschiedenen Strahldüsen (16, 17, 18) von der Vielzahl (15) der Strahldüsen, die zum Auftragen jedes individuellen Tintenpunkts (1) des vorgegebenen Tintenpunktmusters (3, 30) verwendet werden, nacheinander zum Auftragen des jeweiligen individuellen Tintenpunkts (1) verwendet werden.

3. Verfahren nach Anspruch 2, wobei Auftragen von jedem individuellen Tintenpunkt (1) des vorgegebenen Tintenpunktmusters (3) Auftragen einer ersten Schicht (11) einer Tinte auf die Oberfläche (2) der ophthalmischen Linse oder der ophthalmischen Linsenform (8) unter Verwendung einer ersten Strahldüse (16) der jeweiligen mindestens zwei verschiedenen Strahldüsen (16, 17, 18) und danach Auftragen von mindestens einer weiteren Schicht (12, 13) der Tinte auf die erste Schicht (11) der Tinte unter Verwendung einer zweiten, von der ersten Strahldüse (16) der jeweiligen mindestens zwei verschiedenen Strahldüsen (16, 17, 18) verschiedenen, Strahldüse (17) der jeweiligen mindestens zwei verschiedenen Strahldüsen (16, 17, 18).

4. Verfahren nach Anspruch 3, wobei Auftragen jedes individuellen Tintenpunkts (1) des vorgegebenen Tintenpunktmusters (3, 30) mindestens partielles Härten der Schichten von Tinte jedes individuellen Tintenpunkts umfasst, nachdem eine letzte Schicht (12, 13) von Tinte jedes individuellen Tintenpunkts aufgetragen worden ist.

5. Verfahren nach einem der vorangehenden Ansprüche, wobei die individuellen Tintenpunkte (1) des vorgegebenen Tintenpunktmusters (3, 30) entlang einer Vielzahl von geraden parallelen Linien angeordnet sind, und wobei die jeweiligen mindestens zwei unterschiedlichen Strahldüsen (16, 17, 18) und die ophthalmische Linse oder die ophthalmische Linsenform (8) relativ zueinander entlang der Vielzahl von geraden parallelen Linien bewegt werden, um jeden individuellen Tintenpunkt (1) des vorgegebenen Tintenpunktmusters (3, 30) auf die Oberfläche (2) der ophthalmischen Linse oder der ophthalmischen Linsenform (8) aufzutragen.

6. Verfahren nach Anspruch 5, wobei die Vielzahl (15) der Strahldüsen entlang mindestens einer geraden Linie senkrecht zu den geraden parallelen Linien angeordnet ist, entlang denen die individuellen Tintenpunkte (1) des vorgegebenen Tintenpunktmusters (3) angeordnet sind.

7. Verfahren nach Anspruch 2 und einem der Ansprüche 5 oder 6, wobei Auftragen jedes individuellen Tintenpunkts (1) des vorgegebenen Tintenpunktmusters (3, 30) durchgeführt wird, indem die ophthalmische Linse oder die ophthalmische Linsenform (8) entlang der Vielzahl der geraden parallelen Linien bewegt wird, entlang denen die individuellen Tintenpunkte (1) des vorgegebenen Tintenpunktmusters (3, 30) angeordnet sind, und indem nacheinander drei verschiedene Strahldüsen (16, 17, 18) der Vielzahl (15) von Strahldüsen verwendet werden, die aufeinander folgend und starr entlang einer solchen geraden Linie von der Vielzahl der geraden parallelen Linien angeordnet sind.

8. Verfahren nach einem der vorangehenden Ansprüche, wobei das vorgegebene Tintenpunktmuster (3, 30) ein limbales Ringmuster ist.

9. Verfahren nach einem der vorangehenden Ansprüche, wobei die ophthalmische Linse (8) eine Kontaktlinse ist, insbesondere eine weiche Kontaktlinse, und wobei die ophthalmische Linsenform (8) eine Kontaktlinsenform ist, insbesondere eine Kontaktlinsenform zum Formen von weichen Kontaktlinsen.

10. Verfahren nach einem der vorangehenden Ansprüche, wobei die Oberfläche (2) der ophthalmischen Linsenform (8), auf die das vorgegebene Tintenpunktmuster (3, 30) aufgetragen wird, eine weibliche ophthalmische Linsenform (8) ist.

## Revendications

1. Procédé d'application d'un motif de points d'encre prédéterminé (3, 30) à une surface (2) d'une lentille ophtalmique ou d'un moule de lentille ophtalmique (8), le procédé comprenant les étapes de :
- obtention d'une pluralité (15) de buses à jet ;
- application du motif de points d'encre prédéterminé (3, 30) à la surface (2) de la lentille ophtalmique ou du moule de lentille ophtalmique (8) au moyen de la pluralité (15) de buses à jet,
dans lequel l'application du motif de points d'encre prédéterminé (3, 30) à la surface (2) de la lentille ophtalmique ou du moule de lentille ophtalmique (8) comprend l'application de chaque point d'encre individuel (1) du motif de points d'encre prédéterminé (3) au moyen d'au moins deux buses à jet différentes (16, 17, 18) de la pluralité (15) de buses à jet,
**caractérisé en ce que** l'application de chaque point d'encre individuel (1) du motif de points d'encre prédéterminé (3, 30) est effectuée en appliquant, par point d'encre individuel (1), une quantité totale d'encre supérieure à la quantité d'encre nécessaire pour que chaque point d'encre individuel (1) atteigne un contraste prédéterminé.

2. Procédé selon la revendication 1, dans lequel les au moins deux buses à jet différentes respectives (16, 17, 18) de la pluralité (15) de buses à jet utilisées pour appliquer chaque point d'encre individuel (1) du motif de points d'encre prédéterminé (3, 30) sont utilisées successivement pour appliquer le point d'encre individuel respectif (1).

3. Procédé selon la revendication 2, dans lequel l'application de chaque point d'encre individuel (1) du motif de points d'encre prédéterminé (3) comprend l'application d'une première couche (11) d'une encre à la surface (2) de la lentille ophtalmique ou du moule de lentille ophtalmique (8) au moyen d'une première buse à jet (16) des au moins deux buses à jet différentes respectives (16, 17, 18), puis l'application d'au moins une couche supplémentaire (12, 13) de l'encre sur la première couche (11) de l'encre au moyen d'une deuxième buse à jet (17) des au moins deux buses à jet différentes respectives (16, 17, 18) différente de la première buse à jet (16) des au moins deux buses à jet différentes respectives (16, 17, 18).

4. Procédé selon la revendication 3, dans lequel l'application de chaque point d'encre individuel (1) du motif de points d'encre prédéterminé (3, 30) comprend le durcissement au moins partiel des couches d'encre de chaque point d'encre individuel après qu'une couche finale (12, 13) d'encre de chaque point d'encre individuel a été appliquée.

5. Procédé selon l'une quelconque des revendications précédentes, dans lequel les points d'encre individuels (1) du motif de points d'encre prédéterminé (3, 30) sont disposés le long d'une pluralité de lignes droites parallèles, et dans lequel les au moins deux buses à jet différentes respectives (16, 17, 18) et la lentille ophtalmique ou le moule de lentille ophtalmique (8) sont déplacés les uns par rapport aux autres le long de la pluralité de lignes droites parallèles pour appliquer chaque point d'encre individuel (1) du motif de points d'encre prédéterminé (3, 30) à la surface (2) de la lentille ophtalmique ou du moule de lentille ophtalmique (8).

6. Procédé selon la revendication 5, dans lequel la pluralité (15) de buses à jet est disposée le long d'au moins une ligne droite perpendiculaire aux lignes droites parallèles le long desquelles sont disposés les points d'encre individuels (1) du motif de points d'encre prédéterminé (3).

7. Procédé selon la revendication 2 et l'une quelconque des revendications 5 et 6, dans lequel l'application de chaque point d'encre individuel (1) du motif de points d'encre prédéterminé (3, 30) est effectuée en déplaçant la lentille ophtalmique ou le moule de lentille ophtalmique (8) le long de la pluralité de lignes droites parallèles le long desquelles sont disposés les points d'encre individuels (1) du motif de points d'encre prédéterminé (3, 30), et en utilisant successivement trois buses à jet différentes (16, 17, 18) de la pluralité (15) de buses à jet qui sont disposées à la suite et de façon fixe le long d'une dite ligne droite de la pluralité de lignes droites parallèles.

8. Procédé selon l'une quelconque des revendications précédentes, dans lequel le motif de points d'encre prédéterminé (3, 30) est un motif d'anneau limbique.

9. Procédé selon l'une quelconque des revendications précédentes, dans lequel la lentille ophtalmique (8) est une lentille de contact, en particulier une lentille de contact souple, et dans lequel le moule de lentille ophtalmique (8) est un moule de lentille de contact, en particulier un moule de lentille de contact pour mouler des lentilles de contact souples.

10. Procédé selon l'une quelconque des revendications précédentes, dans lequel la surface (2) du moule de lentille ophtalmique (8) à laquelle est appliqué le motif de points d'encre prédéterminé (3, 30) est la surface de moulage d'un moule femelle de lentille ophtalmique (8).
